# EUROPEAN PATENT APPLICATION

(11) **EP 1 553 001 A1**
(43) Date of publication of application: **13.07.2005**
(21) Application number: 04106750.5
(22) Date of filing: 20.12.2004
(51) Int. Cl.: B62B 7/10

(54) **Child pushchair**

(30) Priority: 09.01.2004 ES 200400034
(71) Applicant: Play, S.A., 08184 Palau de Plegamans (ES)
(72) Inventor: Jane Stopp, Joaquim PLAY, S.A., 08184, Palau de Plegamans (ES)
(74) Representative: Ponti Sales, Adelaida

(57) **Abstract**

The child pushchair (1) comprises a frame (2) and at least a frontal wheel (3b) and rear wheels (3a, 3b), ant it is characterised in that the frontal wheel or wheels (3b) are rotatable about a substantially horizontal axis (4), so that they are movable between a use position and a folded position, in which the frontal wheel or wheels (3b) are folded toward the inside of said frame (2).

It permits that the folded pushchair occupies a very reduced space.

## Description

The present invention refers to a child pushchair, which comprises a series of wheels placed so that they define a triangle or an square.

### BACKGROUND OF THE INVENTION

The child pushchairs actually used comprise a series of wheels which can be places defining a square or a triangle.

The pushchairs with wheels defining a square are suitable for their use in cities and in narrow places, because they occupy a reduce space and permit a great manoeuvrability.

In the case of pushchairs which comprise a plurality of wheels forming a triangle, they can also be used in irregular grounds, because the wheels of the three vertexes of the triangle are always in contact with the ground.

However, this type of pushchairs has the drawback that they occupy a great space, which is specially important if it has to be introduced in an elevator or inside a boot of a vehicle of reduced dimensions.

### DESCRIPTION OF THE INVENTION

With the child pushchair of the invention the cited drawbacks can be solved, presenting another advantages that will be described.

The child pushchair of the present invention comprises a frame and at least one frontal wheel and rears wheels, and it is characterised in that the frontal wheel or wheels are rotatable about a substantially horizontal axis, so that they are movable between a use position and a folded position, in which the frontal wheel or wheels are folded toward the inside of said frame.

Thanks to this feature, the child pushchair in its folded position occupies a very reduced space, which permits the pushchair to enter in any elevator or vehicle boot.

To facilitate the handling of the frontal wheel or wheels, the child pushchair of the present invention comprises means to lock and release said frontal wheel or wheels with respect to said frame.

According to a preferred embodiment, said locking and releasing means comprise a hook which can be engaged to said frame associated with a lever.

Preferably, said substantially horizontal axis about which the frontal wheel or wheels rotate is located outside of the diameter of said wheel or wheels.

### BRIEF DESCRIPTION OF THE DRAWINGS

For a better understanding of the invention, some drawing are attached in which, diagrammatically and only as a non-limitative example, an practical embodiment is shown.
Fig. 1 is a perspective view of the child pushchair of the present invention in its use position;
Fig. 2-4 are perspective views of the child pushchair of the present invention during its folding; and
Fig. 5 is a perspective view of the child pushchair of the present invention in its folded position.

### DESCRIPTION OF A PREFERRED EMBODIMENT

As can be seen from the drawings, the child pushchair, identified generally by the numerical reference 1, comprises a frame 2 and a plurality of wheels 3a, 3b. In the case of the embodiment shown, said wheels 3a, 3b are placed defining a triangle formed by dos rear vertexes and one frontal vertex.

In this embodiment, el frontal vertex is formed by two frontal wheels 3b placed one besides the other and rotatable about a substantially vertical axis. However, it must be pointed out that the frontal vertex could be formed by only one frontal wheel 3b, and that the wheels of the child pushchair could define a square.

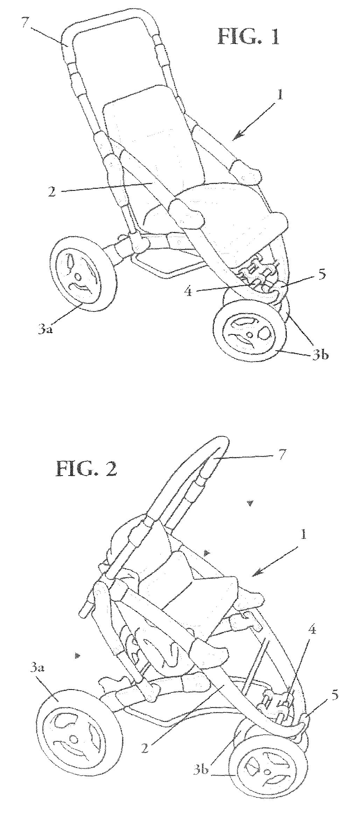

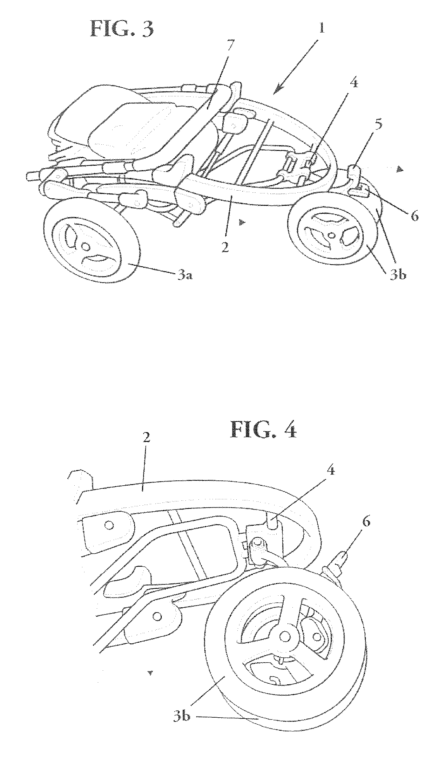

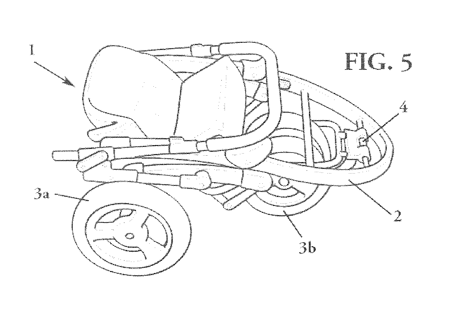

According to the invention, the frontal wheels 3b are rotatable about a substantially horizontal axis 4 between a use position (shown in Fig. 1 and 2) and a folded position (shown in Fig. 5).

Associated with said frontal wheels 3b are locking and releasing means of them with respect to the frame 2. Said means, in the embodiment shown, comprises a hook 5 which engages to the frontal part of said frame 2. This hook 5 is associated to a lever 6, which facilitates the engagement and disengagement of it.

In Fig. 1 is shown the child pushchair 1 of the present invention in the use position. If the pushchair 1 is to be folded, first the upper handle 7 is folded forwards, because it is articulated about the frame 2 (Fig. 2 and 3).

Once the folding of the upper handle 7 is made, the hook 5 is disengaged from the frontal part of the frame 2 by the lever 6 (Fig. 3).

When the hook 5 has be released, the frontal wheels 3b can rotate about said substantially horizontal axis 4, as it is shown by the arrow in Fig. 4.

When this rotation is made, the frontal wheels 3b are placed in the folded position, shown in Fig. 5, in which position they do not protrude from the frame 2. This is because the substantially horizontal axis 4 is placed outside the diameter of the frontal wheels 3b.

This way, el child pushchair 1 of the present invention occupies a very reduced space, and it can be placed in very narrow places, such as the boot of a vehicle or an elevator of reduced dimensions.

To place the pushchair of the present invention 1 again in the use position, the reverse operations must be made to the operations that have been described.

According to an embodiment not shown, the pushchair of the present invention could comprise drivers in the upper handle 7 to fold the pushchair, similarly to the pushchairs already known. In this case, the rotation of the frontal wheel or wheels 3b could be made automatically without the necessity to fold manually said frontal wheels 3b. This is possible with the provision of elastic means which retain the frontal wheels 3b in the folded position, so that the locking means are released because of the position that the pushchair acquires as it is folded.

Even though it has been described a particular embodiment of the invention, it is evident for a person skilled in the art that in the child pushchair can be made some variations and modifications, and that all the details cited can be substituted by other technically equivalents, without departing from the scope of protection defined by the enclosed claims.

## Claims

1. Child pushchair (1) , which comprises a frame (2) and at least a frontal wheel (3b) and rear wheels (3a), **characterised in that** the frontal wheel or wheels (3b) are rotatable about a substantially horizontal axis (4), so that they are movable between a use position and a folded position, in which the frontal wheel or wheels (3b) are folded toward the inside of said frame (2).

2. Child pushchair according to claim 1, **characterised in that** it comprises means (5) to lock and release said frontal wheel or wheels (3b) with respect to said frame (1).

3. Child pushchair according to claim 2, **characterised in that** said locking and releasing means comprise a hook (5) which can be engaged to said frame (2) associated with a lever (6).

4. Child pushchair according to claim 1, **characterised in that** said substantially horizontal axis (4) about which the frontal wheel or wheels (3b) rotate is located outside of the diameter of said wheel or wheels (3b).
